# EUROPÄISCHE PATENTSCHRIFT

(11) **EP 1 032 851 B1**
(45) Veröffentlichungstag und Bekanntmachung des Hinweises auf die Patenterteilung: **18.02.2004**
(21) Anmeldenummer: 98952485.5
(22) Anmeldetag: 12.11.1998
(51) Int. Cl.: G02B 5/08, G02B 1/10

(54) **REFLEKTOR MIT RESISTENTER OBERFLÄCHE**
REFLECTOR WITH A RESISTANT SURFACE
REFLECTEUR A SURFACE RESISTANTE

(30) Priorität: 19.11.1997 EP 97810881
(43) Veröffentlichungstag der Anmeldung: 06.09.2000
(73) Patentinhaber: Alcan Technology & Management AG, 8212 Neuhausen am Rheinfall (CH)
(72) Erfinder: GILLICH, Volkmar, CH-8212 Neuhausen am Rheinfall (CH); KIRIN, Renato, CH-8240 Thayngen (CH); FUCHS, Roman, CH-8200 Schaffhausen (CH)
(86) Internationale Anmeldenummer: PCT/CH1998/000487
(87) Internationale Veröffentlichungsnummer: WO 1999/027394

(56) Entgegenhaltungen:
- EP-A- 0 456 488
- EP-A- 0 495 755
- EP-A- 0 568 943
- WO-A-97/01775
- GB-A- 1 507 532
- GB-A- 2 267 509
- GB-A- 2 292 751
- US-A- 5 216 551
- US-A- 5 527 562
- US-A- 5 583 704
- HASS G ET AL: "Reflectance and Durability of Ag Mirrors Coated with Thin Layers of Al2O3 plus Reactively Deposited Silicon Oxide" APPLIED OPTICS, Bd. 14, Nr. 11, November 1975, Seiten 2639-2644, XP002063788 NEW YORK US

## Beschreibung

Vorliegende Erfindung betrifft einen gegen mechanische Angriffe resistenten umformbaren Reflektor mit hoher Gesamtreflexion, enthaltend einen Reflektorköper aus einem bandförmigen Valzprodukt aus Metall und darauf, übereinander angeordnet, gemäss dem Oberbegriff des Anspruches 1.

Die Erfindung betrifft weiter die Verwendung solcher Reflektoren.

Es ist allgemein bekannt, Bänder in Glänzwerkstoffen, z.B. Reinstaluminium oder AlMg-Legierungen auf Basis von Aluminium mit einem Reinheitsgrad von 99,8 % und grösser, wie z.B. 99,9 %, und Walzoberflächen, die diffuse oder gerichtete Lichtreflexion erzeugen, je nach Anwendung, herzustellen. Es ist auch bekannt, zur Erhöhung der gerichteten Reflexion (Glanzgrad) die Oberflächen von solchen Bändern chemisch oder elektrolytisch zu glänzen und anschliessend durch anodische Oxidation eine Schutzschicht von z.B. 1,5 µm Schichtdicke zu erzeugen.

Die bekannten Verfahren haben den weiteren Nachteil, dass hochreine und teure Glänzlegierungen auf Basis von Reinstaluminium eingesetzt werden müssen. Durch die anodische Oxidschicht sinkt der Reflexionsgrad der Oberfläche und dabei sowohl die Gesamtreflexion wie auch die gerichtete Reflexion durch Absorption und diffuse Lichtstreuung, insbesondere in der Oxidschicht. Dies bedeutet einen Energieverlust.

Aus der EP-A-0 495 755 sind Gegenstände mit Oberflächen aus Aluminium bekannt geworden, welche geeignet sind für die Abscheidung von Schichtsystemen aus der Gasphase auf diesen Oberflächen. Auf eine Anodisierung der Oberflächen wird verzichtet, und es wird ein Schichtsystem aus beispielsweise einer Haftschicht, wie einer Keramikschicht, einer Lichtreflexionsschicht, wie einer metallischen Schicht, z.B. aus Aluminium, und einer oder mehreren transparenten Schutzschichten aus beispielsweise den Oxiden, Nitriden oder Fluoriden des Magnesiums, des Titans oder des Praesodyms beschrieben. Solche Schichtsysteme weisen einen hohen Reflexionsgrad auf. Ein derartiges Schichtsystem hat jedoch den Nachteil, dass die Oberfläche sehr empfindlich auf mechanischen Einfluss ist.

Die EP-A-0 568 943 beschreibt die Abscheidung einer Reflexionsschicht auf einer Basisschicht aus Aluminium und einem darüberliegenden Gel-Film, welcher durch ein Sol-Gel-Verfahren auf dem Aluminium abgeschieden worden ist. Die Reflexion wird durch ein Schichtsystem aus den Schichten Siliciumdioxid, Metall, Siliciumdioxid und Titandioxid erreicht. Auch dies ist eine Möglichkeit, zu reflektierenden Aluminiummaterialien zu gelangen. Der in der EP-A 0 568 943 beschriebene Schichtaufbau ist gegen mechanische Beanspruchung nicht in gewünschtem Masse resistent.

Die WO 97/01775 beschreibt gebogene Reflektoren mit einem Reflektorkörper aus Glas und einer darauf angeordneten Grundschicht aus Silicium oder Silicium und Edelstahl sowie einer darüber angeordneten reflektierenden Metallschicht, welche durch eine Schutzschicht aus z.B. Silicium-Nitrit überdeckt ist.

Aus der EP-A-0 456 488 sind Reflektoren mit einem Grundkörper und einer über diesem angeordneten Reflexionsschicht sowie einem nachfolgenden angeordnetem Schichtsystem aus hoch- und niedrigbrechenden Schichten, wobei die reflektierende Schicht direkt auf das Substrat oder auf eine dielektrische Schicht aufgetragen ist Das Schichtsystem kann mit einer Schutzschicht überzogen sein.

Die US-A-5,527,562 beschreibt einen Reflektor mit einem Körper aus Aluminium mit darauf angeordneten Schichten der Reihenfolge anodische Schutzschicht, Siliciumdioxid, metallische Schicht aus Aluminium, Siliciumdioxide und abschliessend Titandioxid.

Die EP 0 495 755 A1 nennt Gegenstände aus Aluminium enthaltend ein Schichtsystem, abgeschieden aus der Basphase, wobei eine Schutzschicht aus Oxiden vorgesehen werden kann.

Aufgabe vorliegender Erfindung ist es, die genannten Nachteile zu vermeiden und Reflektoren vorzuschlagen, deren reflektierende Schicht gegen äussere mechanische Einwirkungen unempfindlich ist und die sich durch eine hohe Wischbeständigkeit auszeichnet.

Erfindungsgemäss wird dies durch Reflektoren gemäss dem Kennzeichnen den Teil von Anspruch 1 erreicht.

Sinngemäss zählt in vorliegender Erfindung die Schutzschicht zu den transparenten Schichten innerhalb der Reflexionsschichtenfolge.

In einer zweckmässigen Ausführungsform beträgt die minimale Dicke der Schutzschicht 3 nm. Es beträgt die Dicke der Schutzschicht 3 bis 20 nm. In vorliegender Erfindungsbeschreibung hat mn die Bedeutung von Nanometer.

Als Reflektorkörper können alle Walzprodukte, die wenigstens eine freie Oberfläche aus einem Metall, wie Eisen, Stahl, Aluminium oder Aluminiumlegierung, aufweisen, zur Anwendung gelangen. Diese freie Oberfläche kann beispielsweise ein Aluminium mit einer Reinheit von 98,3 % und höher, fallweise auch mit einer Reinheit von beispielsweise 99,0 % und höher, 99,7 % und höher, 99,9 % und höher oder 99,95 % und höher sein. Neben Aluminium genannter Reinheiten kann die Oberfläche auch eine Legierung darstellen. Bevorzugte Legierungen sind diejenigen der Klassen AA 1000, AA 3000 und AA 5000. Weitere bevorzugte Legierungen enthalten beispielsweise 0,25 bis 5 Gew.-%, insbesondere 0,5 bis 4 Gew.-% Magnesium oder enthaltend 0,2 bis 2 Gew.-% Mangan oder enthaltend 0,5 bis 5 Gew.-% Magnesium und 0,2 bis 2 Gew.-% Mangan, insbesondere z.B. 1 Gew.-% Magnesium und 0,5 Gew.-% Mangan oder enthaltend 0,1 bis 12 Gew.-%, vorzugsweise 0,1 bis 5 Gew.-% Kupfer oder enthaltend 0,5 bis 6 Gew.-% Zink und 0,5 bis 5 Gew.-% Magnesium oder enthaltend 0,5 bis 6 Gew.-% Zink, 0,5 bis 5 Gew.-% Magnesium und 0,5 bis 5 Gew.-% Kupfer oder enthaltend 0,5 bis 2 Gew.-% Eisen und 0,2 bis 2 Gew.-% Mangan, insbesondere z.B. 1,5 Gew.-% Eisen und 0,4 Gew.-% Mangan oder AlMgSi-Legierungen oder AlFeSi-Legierungen. Weitere Beispiele sind AlMgCu-Legierungen, wie Al99,85Mg0,8Cu oder AlMg-Legierungen, wie AlMg1.

Besonders bevorzugte freie Oberflächen sind beispielsweise aus Aluminium mit einer Reinheit von 99,5 % und höher, 99,8 % und höher, 99,85 % oder Oberflächen aus einer Aluminiumlegierung, enthaltend 0,5 Gew.-% Magnesium oder enthaltend 1 Gew.-% Magnesium oder enthaltend Aluminium einer Reinheit von 99 % und 5 bis 10, insbesondere 7 Gew.-% Magnesium und 6 bis 12 und insbesondere 8 Gew.-% Kupfer. Besonders bevorzugt sind auch alle Aluminium-Legierungen, die walzbar sind.

Beispiele von Reflektorkörpern sind Walzprodukte, wie Folien, Bänder, Platten, Bleche, die gegebenenfalls durch Biegen, Tiefziehen, Kaltfliesspressen und dergleichen umgeformt sein können. Je nach Einsatzzweck kann der ganze Reflektorkörper aus dem Metall und vorzugsweise dem genannten Aluminium oder der Aluminiumlegierung sein, es können aber auch nur Teilbereiche oder Oberflächenbereiche daraus bestehen.

Das Walzprodukt aus dem genannten Metall und insbesondere das Aluminium oder die Aluminiumlegierung, kann auch Teil oder Teiloberfläche eines Verbundes darstellen, z.B. eines Folienverbundes oder Laminates beliebiger Werkstoffe, wie z.B. aus Kunststoffen und Metallen, wie Al-beschichtetes Eisen- oder Stahlblech oder Al-beschichteter Kunststoff.

Die Metall- resp. Aluminiumoberflächen können beispielsweise durch chemische und/oder mechanische Veränderung der Oberfläche durch Walzen erzeugt werden und eine Nachbehandlung durch Schleifen, Polieren, Strahlen mit Hartstoffen usw. kann sich anschliessen. Bevorzugt sind Walzoberflächen, die mit glatten oder strukturierten Walzen erzeugt werden.

Bevorzugt als Reflektorkörper sind Aluminiumbleche oder Al-beschichtetes Eisen- oder Stahlblech in einer Dicke von beispielsweise 0,2 bis 0,8 mm, zweckmässig 0,3 bis 0,7 mm und vorzugsweise 0,4 - 0,5 mm. Ein Beispiel ist ein A4-Aluminiumblech Al 99,5 (Reinheit 99,5%) der Dicke von 0,5 mm.

Die Aluminiumoberflächen können auch einem chemischen oder elektrochemischen Glänzverfahren oder einem alkalischen Beizprozess unterzogen werden. Solche Glänz- oder Beizverfahren werden vor dem Anodisieren angewendet.

Die Aluminiumoberflächen können bei beliebiger Topographie eine Oberflächenrauhigkeit Rₐ von beispielsweise 0,01 bis 5 µm und bevorzugt von 0,01 bis 0,5 µm aufweisen. Weitere vorteilhafte bevorzugte Rauhigkeiten Rₐ sind von 0,01 bis 0,4 µm und insbesondere von 0,03 bis 0,06 µm, wobei 0,04 µm ganz besonders geeignet ist. Die Oberflächenrauhigkeit Rₐ ist definiert in wenigstens einer der DIN-Vorschriften 4761 bis 4768.

Beim vorliegenden Reflektor können zwischen dem Reflektorkörper und der funktionellen Beschichtung a) wenigstens eine Vorbehandlungsschicht angeordnet sein.

Die Vorbehandlungsschicht kann im Falle eines Reflektorkörpers aus einem vorwiegend eisenhaltigen Metall eine durch Phosphatierung, Chromatierung oder durch Verzinken erzeugte Schicht sein. Die Vorbehandlungsschicht kann im Falle eines Reflektorkörpers aus Aluminium beispielsweise eine durch Chromatierung, Phosphatierung oder durch anodische Oxidation erzeugte Schicht sein. Vorzugsweise ist die Vorbehandlungsschicht aus anodisch oxidiertem Aluminium und wird insbesondere direkt aus dem an der Oberfläche des Reflektorkörpers liegenden Aluminium erzeugt. Die Vorbehandlungsschicht kann eine Dicke von beispielsweise wenigstens 10 nm, zweckmässig 20 nm, besonders zweckmässig wenigstens 50 nm, bevorzugt von wenigstens 100 nm und besonders bevorzugt von wenigstens 150 nm aufweisen. Die grösste Dicke der Vorbehandlungsschicht kann beispielsweise 1500 nm und bevorzugt 200 nm betragen. Somit weist die Vorbehandlungsschicht bevorzugt eine Dicke von 100 nm bis 200 nm auf.

Beispielsweise kann die Vorbehandlungschicht eine anodisch erzeugte Oxidschicht sein, die in einem rücklösenden oder nicht rücklösenden Elektrolyten aufgebaut wurde. Die Vorbehandlungschicht kann auch eine Gelbchromatierschicht, eine Grünchromatierschicht, eine Phosphatschicht oder eine chromfreie Vorbehandlungschicht, die in einem Elektrolyten, enthaltend wenigstens eines der Elemente Ti, Zr, F, Mo oder Mn, aufgewachsen ist, enthalten.

Auf den Reflektorkörper direkt, oder -- falls vorhanden -- auf die Vorbehandlungsschicht, wird die funktionelle Beschichtung a) aufgebracht. Im Falle einer anodischen Oxidation kann die durch die anodische Oxidation gebildete Aluminiumoxidschicht die funktionelle Beschichtung a) bilden.

Beispielsweise weist die funktionelle Beschichtung a) eine Dicke von 0,5 bis 20 µm, zweckmässig von 1 bis 20 µm, bevorzugt von 2 bis 10 µm und besonders bevorzugt von 2 bis 5 µm auf. Stellt die durch die anodische Oxidation gebildete Aluminiumoxidschicht die funktionelle Beschichtung a) dar, ist deren Dicke, wie oben erwähnt, von 20 bis 1500 nm.

Die funktionelle Beschichtung a) kann beispielsweise ein Gel-Film, der nach einem Sol-Gel-Verfahren aufgetragen wird, sein. Weitere funktionelle Beschichtungen a) sind Lacke oder Polymere und dabei vorteilhaft vakuumbeständige Lacke und Polymere, Polyester, Epoxy, Polycarbonate, Acryl, Polyvinylchlorid, Polyvinylfluorid, Polyvinylidenfluorid usw.

Der Gel-Film kann eine Beschichtung mit organofunktionellen Silanen einer Metallverbindung sein und kann beispielsweise
A) durch hydrolytische Kondensation von folgenden Komponenten erhalten worden sein, gegebenenfalls in Gegenwart eines Kondensationskatalysators und/oder üblichen Additiven:
   1. mindestens einem vernetzbaren organofunktionellen Silan der Formel (II):

      R"' ₘSiX₍₄₋ₘ₎ (II)

      in der die Gruppen X, die gleich oder verschieden sein können, Wasserstoff, Halogen, AIkoxy, Acyloxy, Alkylcarbonyl, Alkoxycarbonyl oder -NR"₂ (R" = H und /oder Alkyl) bedeuten und die Reste R"', die gleich oder verschieden sein können, Alkyl, Alkenyl, Alkinyl, Aryl, Arylalkyl, Alkylaryl, Arylalkenyl, Alkenylaryl, Arylalkinyl oder Alkinylaryl darstellen, wobei diese Reste durch O- oder S- Atome oder die Gruppe -NR" unterbrochen sein können und einen oder mehrere Substituenten aus der Gruppe der Halogene und der gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, Acryloxy-, Methacryloxy-, Epoxy- oder Vinylgruppen tragen können und m den Wert 1, 2 oder 3 hat, und/oder einem davon abgeleiteten Oligomeren, wobei der Rest R"' und/oder der Substituent ein vernetzbarer Rest bzw. Substituent sein muss, in einer Menge von 10 bis 95 Mol-%, bezogen auf die Gesamtmolzahl der (monomeren) Ausgangskomponenten;
   2. mindestens einer Metallverbindung der allgemeinen Formel III:

      MeR_{y} (III)

      in welcher Me ein Metall, ausgewählt aus der Gruppe Al, Zr, Ti ist, wobei y im Falle von Aluminium 3 und im Falle von Ti und Zr 4 ist und die Reste R, die gleich oder verschieden sein können, Halogen, Alkyl, Alkoxy, Acyloxy oder Hydroxy bedeuten, wobei die soeben genannten Gruppen ganz oder teilweise durch Chelatliganden ersetzt sein können und /oder einem davon abgeleiteten Oligomeren und/oder einem gegebenenfalls komplexierten Aluminiumsalz einer anorganischen oder organischen Säure, in einer Menge von 5 bis 75 Mol-%, bezogen auf die Gesamtmolzahl der (monomeren) Ausgangskomponenten,
   3. gegebenenfalls mindestens einem nicht vernetzbaren organofunktionellen Silan der Formel I:

      R'ₘSiX₍₄₋ₘ₎ (I)

      in der die Gruppen X, die gleich oder verschieden sein können, Wasserstoff, Halogen, Hydroxy, Alkoxy, Acyloxy, Alkylcarbonyl, Alkoxycarbonyl oder -NR" ₂(R" = H und /oder Alkyl) bedeuten und die Reste R', die gleich oder verschieden sein können, Alkyl, Aryl, Arylalkyl oder Alkylaryl darstellen, wobei diese Reste durch O- oder S- Atome oder die Gruppe - NR" unterbrochen sein können und einen oder mehrere Substituenten aus der Gruppe der Halogene und der gegebenenfalls substituierten Amid-, Aldehyd-, Keto-, Alkylcarbonyl-, Carboxy-, Cyano-, Alkoxy-, Alkoxycarbonyl-Gruppen tragen können und m den Wert 1, 2 oder 3 hat, und/oder einem davon abgeleiteten Oligomeren, in einer Menge von 0 bis 60 Mol-%, bezogen auf die Gesamtmolzahl der (monomeren) Ausgangskomponenten und
   4. gegebenenfalls einem oder mehreren im Reaktionsmedium löslichen, schwerflüchtigen Oxid eines Elementes der Hauptgruppe Ia bis Va oder der Nebengruppen IIb, IIIb, Vb bis VIIIb des Periodensystems, mit Ausnahme von Al, und/oder einer oder mehrerer im Reaktionsmedium löslichen, unter den Reaktionsbedingungen ein schwerflüchtiges Oxid bildenden Verbindungen eines dieser Elemente, in einer Menge von 0 bis 70 Mol-%, bezogen auf die Gesamtmolzahl der (monomeren) Ausgangskomponenten; und
B) dass man zu diesem hydrolytischen Kondensat ein organisches Präpolymer zugibt, wobei die reagierenden vernetzbaren Gruppen des Restes R"' und/oder des vernetzbaren Substituenten am Rest R'" mit denen am Präpolymer vernetzbar sind, oder vorteilhaft gleichnamig sind, und das Präpolymer in einer Menge von 2 bis 70 Mol-%, bezogen auf die Gesamtmolzahl der (monomeren) Ausgangskomponenten, zusetzt;
C) die so erhaltene Beschichtungslösung auf ein Substrat, insbesondere auf den Reflektorkörper, resp. die darauf befindliche Vorbehandlungsschicht aufbringt und anschliessend aushärtet.
Weitere Angaben und Ausführungen zu den funktionellen Beschichtungen a) in Form eines Gel-Filmes können der EP-A 0 610 831 und der EP-A 0 358 011 entnommen werden.

Die genannten Silane können durch Verbindungen ersetzt werden, die anstelle des Siliciums Titan, Zirkon oder Aluminium enthalten. Damit kann die Härte, Dichte und Brechungsindex der funktionellen Beschichtung variiert werden. Die Härte der funktionellen Beschichtung kann ebenso durch die Verwendung verschiedener Silane gesteuert werden, beispielsweise durch Ausbildung eines anorganischen Netzwerkes zur Steuerung der Härte und thermischen Stabilität oder durch Verwendung eines organischen Netzwerkes zur Steuerung der Elastizität. Eine funktionelle Beschichtung, welche zwischen den anorganischen und organischen Polymeren eingeordnet werden kann, wird beispielsweise über den Sol-Gel-Prozess durch gezielte Hydrolyse und Kondensation von Alkoxiden, vorwiegend des Siliciums, Aluminiums, Titans und Zirkons auf den Aluminiumsubstraten aufgebracht werden. Durch den Prozess wird ein anorganisches Netzwerk aufgebaut und über entsprechend derivatisierte Kieselsäure-Ester können zusätzlich organische Gruppen eingebaut werden, die einerseits zur Funktionalisierung und andererseits zur Ausbildung definierter organischer Polymersysteme genutzt werden. Im weiteren kann der Gel-Film auch durch ElektroTauchlackierung nach dem Prinzip der kataphoretischen Abscheidung einer amin- und organisch modifizierten Keramik abgeschieden werden.

Die funktionellen Beschichtungen a), wie die genannten Silane oder die genannten Lacke, können durch Eintauchen, Aufpinseln, Aufwalzen, Schleudern, Spritzen, sogenanntes Coil-Coating usw. auf den Reflektorkörper direkt oder über eine Vorbehandlungsschicht aufgebracht werden.

Nach dem Beschichten der anodisierten Oberfläche des Reflektorkörpers mit der funktionellen Beschichtung a) kann die Beschichtung gehärtet werden. Das Härten kann durch Strahlung, wie UV-Strahlung, Elektronenstrahlung oder Laserstrahlung und/oder bei erhöhter Temperatur erfolgen. Die Temperatur kann durch Konvektion oder Wärmestrahlung, wie IR- und/oder UV-Strahlung, oder durch eine Kombination von Konvektion und Strahlung, wie UV- und/oder IR-Strahlung oder durch Heissgas, wie heisser Luft, erhöht werden. Die Temperatur, gemessen an der unter der funktionellen Beschichtung liegenden Schicht, z.B. der Metall-, wie Aluminiumschicht, ist beispielsweise grösser als 110° C, zweckmässig grösser als 150° C und vorzugsweise zwischen 150° C und 240° C. Für Klarlacke liegen diese Temperaturen beipielsweise häufig bei 230 bis 240° C. Die erhöhte Temperatur kann beispielsweise während 10 sec. bis 120 min. auf den Körper einwirken. Die Konvektionserwärmung kann zweckmässig durch eine Beaufschlagung mit erwärmten Gasen, wie Luft, Stickstoff, Edelgase oder Gemischen daraus, erfolgen.

Die funktionelle Beschichtung a) bewirkt eine Einebnung oder Glättung der Oberfläche. Es werden beispielsweise Werte Rₐ von kleiner als 0,01 µm und bevorzugt von kleiner als 0,02 µm erzielt. Die Oberflächenrauhigkeit Rₐ ist definiert in wenigstens einer der DIN-Vorschriften 4761 bis 4768.

Die funktionelle Beschichtung a) kann eine einzelne Schicht d.h. eine Monoschicht oder auch eine Mehrfachschicht, wie eine Doppelschicht, Dreifachschicht usw. darstellen. Die Mehrfachschichten, wie die Doppelschichten, resp. Dreifachschichten usw. können alle aus demselben Material oder aus unterschiedlichen Materialien, jeweils ausgewählt aus den zur funktionellen Beschichtungen a) genannten Materialien, angewendet werden. Die Doppelbeschichtung, Dreifachbeschichtung usw. kann erzeugt werden beispielsweise durch aufbringen einer ersten Schicht, vorhärten oder aushärten der ersten Schicht, aufbringen der zweiten Schicht und aushärten der zweiten Schicht. Eine nur vorgehärtete erste Schicht kann gleichzeitig mit der zweiten Schicht aushärten. Wird gegenbenfalls eine dritte Schicht aufgebracht, kann die erste und die zweite Schicht ausgehärtet oder vorgehärtet werden und die Aushärtung kann nur die dritte Schicht betreffen oder mit der dritten Schicht können - soweit noch erforderlich - die darunter liegenden Schichten ausgehärtet werden. Gleiches gilt sinngemäss für weitere, wie vierte usw. Schichten. Mit Vorhärten sind beispielsweise Verfahren, wie trocknen lassen, vortrocknen unter Wärme- oder Strahlungseinfluss oder Strahlungsoder Hitzebehandlungen umfasst. Die zweckmässige Dicke einer Doppel- resp. Dreifachschicht liegt im oben angegebenen Bereich von 1 bis 20 µm, wobei jede einzeln aufgetragene Schicht beipielsweise eine Dicke von 2 bis 5 µm aufweisen kann.

Die Reflexionsschichtenfolge b) enthält eine reflektierende Schicht, wie z.B. eine Schicht aus Aluminium, Silber, Kupfer, Gold, Chrom, Nickel oder Legierungen, beispielsweise enthaltend überwiegend wenigstens eines der genannten Metalle. Die Dicke der Reflexionsschicht kann beispielsweise 10 bis 200 nm (Nanometer) betragen. Die reflektierende Schicht kommt in der Regel direkt, oder über eine Haftschicht, auf die funktionelle Beschichtung a) zu liegen.

Die Reflexionsschichtenfolge b) enthält weiters mehrere transparente Schichten. Die transparenten Schichten sind auf der reflektierenden Schicht aufgebracht. Beispielsweise 3, 4, 5, 6, 7, 8, 9 oder 10 transparente Schichten - gezählt ohne die Schutzschicht - erfüllen vorteilhaft bezüglich der optischen Dicke für jede Schicht die Formel λ/2, wobei insbesondere jede dieser transparenten Schichten eine Doppelschicht aus jeweils 2 Schichten der Dicke λ/4 ist. Die optische Dicke jeder transparenten Schicht mit der Formel λ/2 kann um ± 40 nm variieren. Bevorzugt sind drei oder mehrere transparente Schichten, die aus gleichen oder unterschiedlichen Materialien sein können, wobei jede der transparenten Schichten eine optische Dicke von λ/2 ± 40 nm aufweist und insbesondere eine Doppelschicht der Dicke 2 • λ/4 ist. Auf die genannten transparenten Schichten, als oberste Schicht, resp. als die an der Oberfläche liegende Schicht, wird die Schutzschicht, die ihrerseits auch transparent ist, angeordnet. λ entspricht dem Intensitätsmaximum der Wellenlänge der reflektierten elektromagnetischen Strahlung.

Die Materialien der transparenten Schichten bestehen aus oder enthalten z.B. Oxide, Nitride, Fluoride, Sulfide usw. von Alkalimetallen, z.B. Li, Na, K, Erdalkalimetallen, z.B. Mg, Ca, Sr, Ba, Halbmetallen, wie z.B. Si, Übergangsmetallen, z.B. Sc, Ti, V, Cr,Mn, Fe, Co, Ni, Y, Zr, Nb, Mo, Te, Ru,Rh, Pd, Hf, Ta, W, Re, Os, Ir ,Pt, Lanthanoiden, z.B. La, Ce, Pr, Nd, Pm, Dy, Yb, Lu usw. Es können namentlich genannt werden SiOₓ, wobei x die Bedeutung von 1,1 bis 2,0 und vorzugsweise 1,8 hat, Al₂O₃, MgF₂, TiO₂, B₂O₃, Be-Oxid, ZnO, SnO₂, Indium-Zinn-Oxid (ITO), CdS, CdTe und Hafnium- und Zirkon-Oxide. Vorteilhaft weisen wenigstens eine der transparenten Schichten, mit Ausnahme der Schutzschicht, andere Materialien auf, als die Schutzschicht selbst.

Es können eine, mehrere oder alle transparenten Schichten der optischen Dicke λ/2 ± 40 nm Doppelschichten aus jeweils zwei Schichten in einer optischen Dicke von λ/4 sein. Die Doppelschichten aus jeweils zwei Schichten in einer optischen Dicke von λ/4 sind vorteilhaft aus einer niedrigbrechenden Schicht der optischen Dicke λ/4 und einer hochbrechenden Schicht der optischen Dicke λ/4. Die Doppelschichten sind besonders vorteilhaft aus jeweils zwei Schichten, nämlich einer ersten und einer zweiten Schicht in einer optischen Dicke von je λ/4 und dabei aus einer niedrigbrechenden ersten Schicht der optischen Dicke λ/4 aus SiO₂ oder MgF₂ und einer hochbrechenden zweiten Schicht der optischen Dicke λ/4 aus Ti-Oxid oder Ti,Pr-Oxid.

Demnach können zur Verstärkung des Reflexionsgrades als Folge partieller Lichtreflexion an der Phasengrenze mehrere transparente Schichten der optischen Dicke λ/2 aus zwei transparenten Schichten in einer optischen Dicke von λ/4 aus Materialien mit unterschiedlichen Brechungsindizes erzeugt sein. Die einzelnen transparenten Schichten in einer optischen Dicke λ/4 sind typischerweise von 30 nm, vorzugsweise von 40 nm, bis 200 nm dick. Ein Beispiel einer transparenten Schicht der optischen Dicke λ/2 aus zwei Schichten der optischen Dicke λ/4, kann eine niedrigbrechende Schicht in der optischen Dicke λ/4 aus SiO₂, MgF2 usw. und eine hochbrechende Schicht in der optischen Dicke λ/4 aus Ti-Oxid, Ti/Pr-Oxid, Tantal-Oxid usw. enthalten.

Beispielhaft sind Reflexionsschichtfolgen aus einer reflektierenden Schicht, darauf eine transparente Schicht in einer optischen Dicke λ/4 mit niedrigem Brechungsindex und darauf eine transparente Schicht in einer optischen Dicke λ/4 mit hohem Brechungsindex und eine Schutzschicht, die an der Oberfläche liegt, aus einem Siliciumoxid der allgemeinen Formel SiOₓ, wobei x eine Zahl von 1,1 bis 2,0 ist, oder Aluminiumoxid, in einer Dicke von 3 nm oder grösser. Eine noch höhere Reflexion kann mit mehreren Doppelschichten 2 • λ/4, alternierend mit niedrigerem und höherem Brechungsindex, erfindungsgemäss erreicht werden.

Vorliegende Erfindung umfasst demnach Reflektoren, enthaltend den Reflektorkörper, fallweise darauf eine Vorbehandlungsschicht, die auf dem Reflektorkörper aufgebracht oder oberflächlich aus dem Reflektorkörper selbst gebildetet ist, darauf aufgebracht die funktionelle Beschichtung und darauf aufgebracht die Reflexionsschichtenfolge. Die Reflexionsschichtenfolge ihrerseits weist die reflektierende Schicht auf, die in der Regel auf der funktionellen Schicht aufliegt. In einer Ausführungsform können auf der reflektierenden Schicht mehrere transparente Schichten der optischen Dicke λ/2 aufliegen, die ihrerseits mit der Schutzschicht abgedeckt sind. Die mit Schutzschicht bezeichnete Schicht stellt demnach immer die an einem Reflektor aussenliegende, freie, mechanischen Einflüssen unmittelbar ausgesetzte Schicht dar.

Alle oder einzelne Schichten der Reflexionsschichtenfolge b) können beispielsweise durch Gas- oder Dampfphasenabscheidung im Vakuum, (physical vapor deposition, PVD), durch thermische Verdampfung, durch Elektronenstrahlverdampfung, mit und ohne Ionenunterstützung, durch Sputtern, insbesondere durch Magnetronsputtering, durch Plasmapolymerisation oder durch chemische Gasphasenabscheidung (chemical vapor deposition, CVD) mit und ohne Plasmaunterstützung, auf den Reflektorkörper, resp. auf eine darauf befindliche Vorbehandlungsschicht, aufgebracht werden. Andere Auftragungsverfahren sind Lackier- oder Tauchziehverfahren von im Sol-Gel-Prozess hergestellten Lösungen mit anschliessender Trocknung, flammpyrolytische Verfahren oder Flammbeschichtung mittels SiO₂. Es können auch zwei oder mehrere Verfahren kombiniert werden. Es können z.B. PVD-Schichten durch eine Flammbeschichtung mit SiO₂ ergänzt werden.

Die reflektierende Schicht resp. die Reflexionsschichtenfolge kann beispielsweise in einer Prozessfolge auf die Oberfläche gebracht werden, welche - fallweise die Schritte der Entfettung und Reinigung -, das Einschleusen des die zu beschichtende Oberfläche enthaltenden Gegenstandes in eine Vakuumanlage, das Reinigen beispielsweise durch Sputtern, durch Entladung (glow discharge) etc., in erster Stufe die Abscheidung einer lichtreflektierenden und insbesondere metallischen Schicht, und zweiter Stufe die Abscheidung einer transparenten Schicht und gegebenenfalls in dritter, vierter usw. Stufen, die Abscheidung einer zweiten, dritten usw. transparenten Schicht und des Ausschleusens des beschichteten Gegenstandes aus dem Vakuum enthält.

Die reflektierende Schicht kann auch nach einem elekrolytischen oder nasschemischem Verfahren erzeugt werden. Die transparenten Schichten und dabei insbesondere die Schutzschicht, können als Gel-Filme vorliegen, die durch ein Sol-Gel Verfahren erzeugt werden. Die transparenten Schichten und dabei insbesondere die Schutzschicht, können auch flammpyrolytisch erzeut werden. Es ist auch möglich, unterschiedliche Verfahren für die einzelnen Schichten einer Schichtenfolge anzuwenden.

Beispielsweise bei Walzprodukten, wie Folien, Bändern oder Blechen, oder bei Laminaten mit einer Aluminiumschicht, werden einzelne oder vorzugsweise alle Beschichtungen in kontinuierlichen Verfahren, in der Regel sogenannten Band- oder Durchlaufverfahren, auch coil-coating genannt, aufgetragen, resp. abgeschieden. Für die Erzeugung der Vorbehandlungsschicht können beispielsweise die Verfahren zur anodischen Oxidation von Aluminium angewendet werden. Auch die funktionelle Beschichtung a), z.B. eine Sol-Gel-Schicht, kann in kontinuierlichen Verfahren aufgetragen werden, wobei das Sol durch Tauchen, Spritzen etc. oder im sogenannten Coil-Coating auf die zu behandelnde Oberfläche aufgetragen wird und durch anschliessende Strahlungs- und/oder Wärmebehandlung im Durchlaufofen getrocknet resp. gehärtet wird. Schliesslich kann die Reflexionsschichtenfolge b) durch Bedampfen, Sputtern etc., jeweils insbesondere im Vakuum, usw., abgeschieden werden.

Die Reflexionsschichtenfolge b) auf dem Reflektorkörper, dient insbesondere zur Reflexion von elektromagnetischer Strahlung oder Energie in Form von Wellen und/oder Teilchen, zweckmässig zur Reflexion der Strahlung, mit Wellenlängen im optischen Bereich und vorzugsweise des sichtbaren Lichtes, insbesondere mit Wellenlängen zwischen 400 bis 750 nm.

Die erfindungsgemässen Reflektoren mit Oberflächen, die eine erfindungsgemässe Reflexionsschichtenfolge tragen, weisen eine hervorragende Reflexion, beispielsweise für elektromagnetische Strahlung und insbesondere elektromagnetische Strahlung im optischen Bereich, auf. Der optische Bereich umfasst z.B. Infrarot, den Bereich des sichtbaren Lichtes, des Ultravioletts usw. Bevorzugtes Anwendungsgebiet ist der Bereich der elektromagnetischen Strahlung und dabei des sichtbaren Lichtes.

Die Reflexion der Strahlung kann je nach Oberfläche gerichtet, gestreut oder eine Kombination davon sein. Demgemäss eignen sich die Reflektoren nach vorliegender Erfindung beispielsweise als Reflektoren, wie Reflektoren z.B. für Strahlungsquellen oder optische Geräte. Solche Strahlungsquellen sind z.B. Beleuchtungskörper, wie Bildschirmarbeitsplatz-Leuchten, Primärleuchten, Sekundärleuchten, Rasterleuchten, Lichtleitelemente, Lichtdecken, Lichtumlenklamellen oder Wärmestrahler. Die Reflektoren können z.B. auch Spiegel oder Innenspiegel von optischen Geräten, Beleuchtungskörpern oder Wärmestrahlern sein.

Die Reflexionsschichtenfolge b) auf dem Reflektionskörper führt insbesondere zu Reflektoren, deren beschichtete Oberflächen eine Gesamtreflexion, gemessen als Reflexionswert nach DIN 5036, von zweckmässig 90% und höher, und insbesondere von 94% bis 96% und höher aufweisen.

Die Reflektoren nach vorliegender Erfindung weisen z.B. eine überragende Wischfestigkeit und auch Härte auf. Die Wischfestigkeit kann bestimmt werden nach DIN 58196. Zusammendfassend wird nach vorliegender Norm DIN 58196 eine Probe mit einem filzbezogenen Stempel mit der Auflagekraft von 4,5N (entsprechend ca. 450 g) über eine Wischstrecke von 120 mm mit 100 Hüben innerhalb 74 Sekunden (1,3 Hz) geprüft. Der Testzyklus wird 20, 50 und 80 mal wiederholt und die Proben danach jeweils bewertet. Auf einer Bewertungsskala von 1 bis 5 bedeutet die Note 1 keine Beschädigung der Oberfläche, 2 bedeutet Abriebspuren sind erkennbar bei spezieller Betrachtung im Lichtkasten, 3 bedeutet Abriebspuren sind erkennbar bei Betrachtung mit Tageslicht, 4 bedeutet starke Abriebspuren über die ganze Fläche und 5 bedeutet sehr starke Abriebspuren über die ganze Fläche sind sichtbar. Die Reflektoren, beispielsweise in Form von Folien, Bändern oder Blechen, lassen sich auch umformen, wobei kaum Rissbildung sichtbar wird. Die Reflektoren nach der Erfindung weisen eine gute Schutzwirkung gegen mechanischen Abbau, wie mechanische Beschädigung, z.B. Ritzhärte, oder Abrieb und dabei insbesondere eine hohe Wischbeständigkeit auf. Mechanische Beschädigungen können beispielsweise bei der Reinigung von Oberflächen, d.h. den reflektierenden Schichten, durch Staub, Sand und dergleichen, der zwischen dem Reinigungsgerät und der Oberfläche eingeschlossen ist oder durch das Reinigungsgerät selbst, wie einen Lappen, Wischer, Bürste etc., erfolgen.

Vorliegende Erfindung umfasst auch die Verwendung von Reflektoren enthaltend eine gegen mechanische Angriffe resistente Oberfläche mit hoher Gesamtreflexion zur Reflexion von Strahlungen im optischen Bereich, d.h. von Tages- und Kunstlicht, von Wärmestrahlung, von sichtbarem Licht, Ultraviolettlicht etc. Besondere Bedeutung hat die Verwendung der Reflektoren für die Reflexion von sichtbarem Licht, insbesondere von Tages- oder Kunstlicht, einschliesslich UV-Licht. Die erfindungsgemässsen Reflektoren sind beispielsweise geeignet als Reflektoren oder Lichtleitelemente in der Licht- und Leuchtentechnik, wie z.B. als Reflektoren in Bildschirmarbeitsplatz-Leuchten, Primärleuchten, Sekundärleuchten, Rasterleuchten, Lichtleitelemente, Lichtdecken oder als Lichtumlenklamellen usw.

### Beispiele

Verschiedene Versuchsmuster aus Aluminium oder dessen Legierungen werden teilweise durch eine Anodisierung vorbehandelt, teilweise lediglich entfettet, und anschliessend mit einem Lack beschichtet. Auf die Lackschicht wird durch ein PVD-Verfahren eine Reflexionsschichtenfolge aufgebracht. Die Reflexionsschichtenfolge besteht nacheinander aus der reflektierenden Aluminiumschicht in einer Dicke von 50 nm und darauf abgeschieden zuerst einer Siliciumoxid-Schicht in einer optischen Dicke von λ/4 und danach einer TitanoxidSchicht in einer optischen Dicke von λ/4. Erfindungsgemäss wird die Schutzschicht in Form einer 5 bis 10 nm dicken SiO₂-Schicht durch ein weiteres PVD-Verfahren als äusserste Schicht aufgebracht. Bei den Vergleichsbeispielen fehlt jeweils die Schutzschicht. Alle Muster werden dem Wischtest nach DIN 58196 unterworfen und es wird die Wischfestigkeit der Muster beurteilt. Die erfindungsgemässen Muster werden jeweils nach 50 Testzyklen zu 100 Wischhüben benotet. Die Vergleichsmuster fallen in der Wischfestigkeit derart ab, dass die Anzahl Testzyklen angegeben wird, nach denen eine schlechte Benotung von 3 oder höher bis maximal 5 erreicht wird. Die Versuchsanordnung und die Testwerte sind in nachfolgender Tabelle festgehalten.

Es ist aus der nachfolgenden Tabelle erkennbar, dass die Schutzschicht zu einer erheblichen Verbesserung der Wischfestigkeit führt. Nach Testabbruch bei 50 Testzyklen zu jeweils 100 Hüben zeigen alle Testmuster nach der Erfindung eine noch unbeschädigte Oberfläche mit der Benotung 1. Die Vergleichsmuster dagegen fallen bezüglich der Wischfestigkeit deutlich ab und bereits nach weniger als 10, resp. 20 Testzyklen, werden die Muster derart beschädigt, dass die Note 3 oder schlechter erreicht ist.

**Tabelle:**

| Muster-Nr. | Substrat | Vorbehandlung | Lack | Reflexionsschichtenfolge | Schutzschicht | Wischtest: Anzahl Testzyklen = Note |
|---|---|---|---|---|---|---|
| 1 | Al99,7 | anodisiert | Sol-Gel¹⁾ | Al/SiO₂/TiO₂ | SiO₂ | 50x = 1 |
| Vergleich 1 | Al99,7 | anodisiert | Sol-Gel¹⁾ | Al/SiO₂/TiO₂ | ohne | kleiner 10x |
| 2 | Al99,9 | entfettet | Sol-Gel ¹⁾ | Al/SiO₂/TiO₂ | SiO₂ | 50x = 1 |
| Vergleich 2 | Al99,9 | entfettet | Sol-Gel ¹⁾ | Al/SiO₂/TiO₂ | ohne | kleiner 20x |
| 3 | AlMgCu | entfettet | SiO₂/TiO₂ Sol/Gel-Mischung | Al/SiO₂/TiO₂ | SiO₂ | 50x = 1 |
| Vergleich 3 | AlMgCu | entfettet | SiO₂/FiO₂ Sol/Gel-Mischung | Al/SiO₂/TiO₂ | ohne | kleiner 10x |
| 4 | AlMg | entfettet | Sol/Gel auf Polysiloxanbasis | Al/SiO₂/TiO₂ | SiO₂ | 50x = 1 |
| Vergleich 4 | AlMg | entfettet | Sol/Gel auf Polysiloxanbasis | Al/SiO₂/TiO₂ | ohne | kleiner 20x |
| 5 | Al99,7 | Sperrschicht 150 nm Al₂O₃ | Sol-Gel ¹⁾ | Al/SiO₂/TiO₂ | SiO₂ | 50x = 1 |
| Vergleich 5 | Al99,7 | Sperrschicht 150 nm Al₂O₃ | Sol-Gel ¹⁾ | Al/SiO₂/TiO₂ | ohne | kleiner 20x |

| | | | | | | |
|---|---|---|---|---|---|---|
| ¹⁾ Mit organischem Anteil | | | | | | |

## Patentansprüche

1. Gegen mechanische Angriffe resistenter umformbarer Reflektor mit hoher Gesamtreflexion, enthaltend einen Reflektorkörper aus einem bandförmigen Walzprodukt aus Metall und darauf, übereinander angeordnet,
a) einer funktionellen Beschichtung aus einem Gel-Film, Lack oder Polymer einer Dicke von 0,5 bis 20 µm oder, im Falle eines Reflektorkörpers aus Aluminium, auch aus anodisch oxidiertem Aluminium, direkt aus dem an der Oberfläche des Reflektorkörpers liegenden Aluminium, in einer Dicke von 10 bis 1500 nm, und
b) einer Reflexionsschichtenfolge, enthaltend eine reflektierende Schicht und mehrere transparente Schichten aus mehreren niedrigbrechenden Schichten und mehreren hochbrechenden Schichten
**dadurch gekennzeichnet dass**,
die Reflexionsschichtenfolge ein Siliciumoxid oder Aluminiumoxid als Schutzschicht enthält und die Schutzschicht als an der Oberfläche liegende Schicht die darunter liegenden Schichten gegen mechanische Beschädigungen schützt, und wobei die Reflexionsschichtenfolge das Siliciiumoxid der allgemeinen Formel SiOₓ, wobei x eine Zahl von 1,1 bis 2,0 ist, oder das Aluminiumoxid der Formel Al₂O₃ in einer Dicke von 3 bis 20 nm als Schutzschicht enthält und die Schutzschicht im Wischtest nach DIN 58196 nach 50 Testzyklen mit jeweils 100 Wischhüben keine Beschädigung der Oberfläche zeigt.

2. Reflektor nach Anspruch 1, **dadurch gekennzeichnet, dass** die Reflexionsschichtenfolge b) auf dem Reflexionskörper zu einer Gesamtreflexion, gemessen als Reflexionswert nach DIN 5036, von 90% und höher und insbesondere von 94% bis 96% und höher, führt.

3. Reflektor nach Anspruch 1, **dadurch gekennzeichnet, dass** die Schutzschicht ein bei einem Sol-Gel Verfahren abgeschiedener Gel-Film oder ein aus dem Vakuum oder im Plasma abgeschiedener Dünnfilm oder ein flammpyrolytisch erzeugter Film ist.

4. Verwendung der Reflektoren nach Anspruch 1 als Reflektoren oder Lichtleitelemente für Kunstlicht und Tageslicht.

5. Verwendung der Reflektoren nach Anspruch 4 in der Licht- und Leuchtentechnik als Reflektoren in Bildschirmarbeitsplatz-Leuchten, Primärleuchten, Sekundärleuchten, Rasterleuchten, Lichtdecken oder als Lichtumlenklamellen.

## Claims

1. Reflector with high total reflection which can be reshaped and is resistant to mechanical attacks, containing a reflector body made from a band-like rolled product made from metal and thereon, arranged one above another,
a) a functional coating of a gel film, lacquer or polymer of thickness from 0.5 to 20 µm or, in the case of a reflector body made from aluminium, also made from anodically oxidised aluminium, directly from the aluminium lying on the surface of the reflector body, in a thickness from 10 to 1,500 nm, and
b) a reflection layer sequence containing a reflecting layer and several transparent layers made from several low-refractive layers and several highly refractive layers, **characterised in that** the reflection layer sequence contains a silicon oxide or aluminium oxide as a protective layer and the protective layer as the layer lying on the surface protects the layers lying underneath from mechanical damage, and wherein the reflection layer sequence is the silicon oxide of the general formula SiOₓ, wherein x is a number from 1.1 to 2.0, or contains the aluminium oxide of the formula Al₂O₃ in a thickness from 3 to 20 nm as the protective layer and the protective layer shows no damage to the surface in the wipe test according to DIN 58 196 after 50 test cycles with in each case 100 wiping strokes.

2. Reflector according to claim 1, **characterised in that** the reflection layer sequence b) on the reflection body leads to a total reflection, measured as reflection value according to DIN 5036, of 90% and higher and in particular of 94% to 96% and higher.

3. Reflector according to claim 1, **characterised in that** the protective layer is a gel film deposited in a sol-gel process or a thin film deposited from vacuum or by plasma or a film produced by flame pyrolysis.

4. Use of the reflectors according to claim 1 as reflectors or light guide elements for artificial light and daylight.

5. Use of the reflectors according to claim 4 in light and illuminating technology as reflectors in display workstation lighting, primary lighting, secondary lighting, raster lighting, light covers or as light-deflecting lamellae.

## Revendications

1. Réflecteur déformable résistant aux attaques mécaniques avec un facteur de réflexion globale élevé contenant un corps de réflecteur constitué d'un produit laminé en métal en forme de bande et sur celui-ci, disposés l'un sur l'autre,
a) un revêtement fonctionnel constitué d'un gel-film, d'une laque ou d'un polymère d'une épaisseur de 0,5 à 20 µm ou, dans le cas d'un corps de réflecteur en aluminium, également constitué d'aluminium anodiquement oxydé, directement sur l'aluminium se trouvant sur la surface du corps de réflecteur, d'une épaisseur de 10 à 1500 nm, et
b) une série de couches de réflexion contenant une couche réfléchissante et plusieurs couches transparentes de plusieurs couches de faible indice de réfraction et de plusieurs couches d'indice de réfraction élevé,
**caractérisé en ce que**
la série de couches de réflexion contient un oxyde de silicium ou un oxyde d'aluminium comme couche protectrice et la couche protectrice protège, en tant que couche se trouvant sur la surface, les couches se trouvant en dessous de détériorations mécaniques, et
la série de couches de réflexion contenant l'oxyde de silicium de la formule générale SiOₓ, où x est un nombre de 1,1 à 2,0, ou l'oxyde d'aluminium de la formule Al₂O₃ dans une épaisseur de 3 à 20 nm comme couche protectrice, et la couche protectrice ne présentant dans le test d'essuyage selon DIN 58196 après 50 cycles de test avec à chaque fois 100 coups d'essuyage aucune détérioration sur la surface.

2. Réflecteur selon la revendication 1, **caractérisé en ce que** la série de couches de réflexion b) sur le corps de réflecteur mène à un facteur de réflexion globale, mesuré comme valeur de réflexion selon DIN 5036, de 90 % et supérieur et en particulier de 94 % à 96 % et supérieur.

3. Réflecteur selon la revendication 1, **caractérisé en ce que** la couche protectrice est un gel-film déposé selon un procédé sol-gel ou un film mince déposé sous vide ou dans un plasma ou un film produit par flamme pyrolytique.

4. Utilisation des réflecteurs selon la revendication 1 comme réflecteurs ou éléments de guidage de la lumière pour de la lumière artificielle ou de la lumière naturelle.

5. Utilisation des réflecteurs selon la revendication 4 dans la technique d'illumination et d'éclairage comme réflecteurs dans des éclairages de postes de travail à écrans, des éclairages primaires, des éclairages secondaires, des paralumes, des plafonds lumineux ou des lamelles de déviation de la lumière.
